# EUROPÄISCHE PATENTSCHRIFT

(11) **EP 3 997 020 B1**
(45) Veröffentlichungstag und Bekanntmachung des Hinweises auf die Patenterteilung: **04.09.2024**
(21) Anmeldenummer: 20731780.1
(22) Anmeldetag: 03.06.2020
(51) Int. Cl.: B65G 29/02, B65G 47/57, B65G 47/84

(54) **VERTIKALER UMSETZER FÜR EINE FÖRDEREINRICHTUNG**
VERTICAL CONVEYOR FOR A CONVEYING INSTALLATION
DISPOSITIF DE TRANSFERT VERTICAL POUR UN TRANSPORTEUR

(30) Priorität: 17.06.2019 AT 505412019
(43) Veröffentlichungstag der Anmeldung: 18.05.2022
(73) Patentinhaber: Knapp AG, 8075 Hart bei Graz (AT)
(72) Erfinder: MATHI, Franz, 8075 Hart bei Graz (AT); PUNTIGAM, Wolfgang, 8075 Hart bei Graz (AT)
(74) Vertreter: Röggla, Harald
(86) Internationale Anmeldenummer: PCT/AT2020/060221
(87) Internationale Veröffentlichungsnummer: WO 2020/252509

(56) Entgegenhaltungen:
- EP-A2- 2 529 635
- JP-A- S6 067 322
- US-A- 3 992 855
- US-A1- 2018 305 123
- US-B1- 6 467 606

## Beschreibung

Die Erfindung betrifft einen vertikalen Umsetzer für eine Fördereinrichtung, umfassend einen Hauptrotor, der dazu ausgebildet ist, zumindest einen Knotenpunkt für eine Fördergutauflage um eine im Wesentlichen horizontal verlaufende Hauptrotationsachse zu rotieren, wobei der Knotenpunkt einen ersten Abstand zur Hauptrotationsachse einnimmt und der vertikale Umsetzer dazu ausgebildet ist, die Fördergutauflage während der Rotation um die Hauptrotationsachse im Wesentlichen horizontal zu halten.

Für Lagersysteme mit Hochregalen oder für Kommissioniersysteme ist bekannt, Fördergut in einer horizontalen Richtung zu befördern, um Fördergut wie befüllte Boxen oder Pakete an eine gewünschte Stelle zu verbringen. Hierzu werden in der Regel automatisierte Gurt-Förderwege oder Rollen-Fahrbahnen eingesetzt, auf denen das Fördergut entlangfahren kann. Um das Fördergut jedoch in einer vertikalen Richtung zu bewegen, beispielsweise um das Fördergut auf einen höhergelegten oder tiefergelegenen Förderweg zu verbringen, müssen entweder Steig- und Gefällestrecken oder gesonderte Vorrichtungen, sogenannte vertikale Umsetzer, eingesetzt werden.

Beispielsweise ist aus der AT 511 860 A2 ein vertikaler Umsetzer bekannt, der Fördergut auf einer Gabel aufnimmt und mit einer Hubbewegung auf ein höhergelegenes Förderband verbringt. Die EP 3 141 501 A1 zeigt eine Hebevorrichtung, mittels welcher Fördergut durch Anheben eines Abschnitts des Förderwegs auf einen höhergelegenen Förderweg gehoben werden kann. Der Nachteil dieser vertikalen Umsetzer ist, dass diese sehr langsam sind und keine stetigen Förderbewegungen ermöglichen, was die Geschwindigkeit des gesamten Fördersystems limitiert. Weiters weisen sie einen sehr hohen Platzbedarf auf.

Die US 10,246,256 B1 offenbart einen vertikalen Umsetzer, der eine stetige Förderbewegung ermöglicht. Dazu werden zwei gegenseitig versetzte Rotationsscheiben eingesetzt, zwischen denen Fördergutauflagen angebracht sind. Durch den gegenseitigen Versatz wird ermöglicht, dass sich die Fördergutauflagen stets in einer horizontalen Stellung befinden. Dieser vertikale Umsetzer hat jedoch den Nachteil, dass er einen Rückhub aufweist, d.h. bei einer vertikalen Bewegung nach oben wird die Fördergutauflage auch in einer horizontalen Richtung bewegt, wodurch es zu Kollisionen des Förderguts mit dem Förderweg kommen kann. Zudem ist die Entnahme des Förderguts aus dem vertikalen Umsetzer wegen der stetigen Rotationsbewegung und der damit verbundenen gleichbleibenden Geschwindigkeit des Förderguts unvorteilhaft, was in Extremfällen zu Beschädigungen des Förderguts führen kann.

Fördereinrichtungen mit Planetengetrieben sind aus den Dokumenten US 2002/10448 A1, US 4643633 A und US 5910078 A bekannt. Für einige Anwendungsgebiete wie Kommissioniersysteme sind diese Fördereinrichtungen jedoch ungeeignet, da das Fördergut mit Vakuumsaugnäpfen angegriffen und verdreht wird.

Die Schrift DE 10 2009 006 044 A1 offenbart ein Führungsgetriebe eines sogenannten Handhabungsmoduls. Demgemäß kann das Führungsgetriebe ein Innenzahnrad und ein Planetenzahnrad aufweisen.

Die Schrift EP 0 251 032 A2 offenbart eine Auspackmaschine für Flaschen. Hierbei werden die Flaschen mit einem gesonderten Mechanismus aus der auf einem ersten Förderband befindlichen Kiste gehoben. Daraufhin werden die Flaschen mit einem Planetengetriebe um vertikale Achsen gedreht, um die Flaschen auf ein zweites Förderband zu verbringen, das sich parallel neben dem ersten Förderband befindet.

Die US 6 467 606 B1 offenbart einen vertikalen Umsetzer nach dem Oberbegriff des Anspruchs 1 für zwei Förderbänder. Der vertikale Umsetzer ist dazu ausgebildet, ein Produkt vom ersten Förderband auf das zweite Förderband zu heben. Hierfür ist ein Hauptrotor vorgesehen, der zwei Knotenpunkte um eine Hauptrotationsachse rotieren lässt. An den Knotenpunkten ist eine Fördergutauflage starr beabstandet. Da die Fördergutauflagen bei der Rotation des Hauptrotors horizontal gehalten werden sollen, können die Fördergutauflagen aufgrund der starren Verbindung zum Knotenpunkt nur auf einer kreisrunden Trajektorie bewegt werden.

Die EP 2 529 635 A2 offenbart einen Längsaxialförderer, der Hebelarme aufweist, die selbst während der Drehbewegung des Längsaxialförderers eine Drehbewegung zu diesem ausführen. Dadurch können Wechselmulden eine konstante horizontale Richtung aufweisen und auf einer elliptischen Umlaufbahn umlaufen. Nachteilig ist, dass durch die elliptische Trajektorie keine Raumoptimierung erzielt wird, da es weiterhin zu einem Rückhub kommt. Es ist daher die Aufgabe der Erfindung, einen vertikalen Umsetzer zu schaffen, der die Nachteile des Standes der Technik überwindet und insbesondere einen geringen Platzbedarf ohne Rückhub aufweist.

Diese Aufgabe wird gemäß der Erfindung gelöst durch einen vertikalen Umsetzer für eine Fördereinrichtung, der die Merkmale des Anspruchs 1 aufweist.

Dieser vertikale Umsetzer ermöglicht es, Fördergut stetig in eine vertikale Richtung zu heben, ohne hierbei jedoch einen Rückhub aufzuweisen, d.h. die Trajektorie, mit welcher sich das Fördergut bewegt, kann im Wesentlichen gerade gewählt werden und muss nicht entlang eines Kreissegments verlaufen, wie dies beispielsweise bei dem vertikalen Umsetzer der US 10,246,256 B1 der Fall war.

Da der Hauptrotor und der Ausgleichrotor dazu ausgebildet sind, in entgegengesetzte Richtungen zu rotieren, kann die Kreisbewegung des Hauptrotors ausgeglichen werden, beispielsweise um eine Trajektorie in der Form eines Polygons zu erzeugen.

Nach einem ersten Aspekt der Erfindung ist die Trajektorie des Förderguts annähernd quadratisch . Zu diesem Zweck ist der Ausgleichrotor dazu ausgebildet, die Fördergutauflage mit einer Ausgleichwinkelgeschwindigkeit zu rotieren, die dreimal höher ist als eine Hauptwinkelgeschwindigkeit, mit welcher der Hauptrotor den Knotenpunkt rotiert, und wobei der erste und der zweite Abstand derart gewählt sind, dass sich die Fördergutauflage im Betrieb des vertikalen Umsetzers entlang einer im Wesentlichen quadratischen Trajektorie bewegt. Die quadratische Trajektorie hat insbesondere den Vorteil, dass die Fördergutauflage in dieser Ausführungsform im Bereich der Ecken eine geringe Geschwindigkeit aufweist, sodass das Fördergut besonders einfach auf und von der Fördergutauflage bewegt werden kann. Dies ist insbesondere beim Zusammenwirken mit Förderwegen oder bei dem Einsatz als Kommissionierplatz vorteilhaft.

Weiters bevorzugt ist der vertikale Umsetzer dazu ausgebildet, die Fördergutauflage nur entlang im Wesentlichen horizontalen und vertikalen Richtungen zu bewegen, d.h. die Trajektorie der Fördergutauflage wird derart gewählt, dass sie ein Quadrat mit vertikalen und horizontalen Seiten ist. Dies ist insbesondere dann von Vorteil, wenn der vertikale Umsetzer für klassische Ausführungsformen von Fördereinrichtungen eingesetzt wird, z.B. bei Z-Förderern oder C-Förderern. Weiters ist diese Ausführungsform auch bei Kommissionierplätzen vorteilhaft, da hierbei Fördergut für eine Kommissionierperson intuitiv wie bei einem Lift von unten zugeführt und wie bei einem Fahrweg horizontal weggebracht werden kann.

Nach einem zweiten Aspekt der Erfindung ist der vertikale Umsetze mit einer dreieckigen Trajektorie ausgeführt, wobei die Winkelgeschwindigkeit des Ausgleichsrotors entgegengesetzt und zweimal höher ist als die des Hauptrotors. Mit der gleichen entgegengesetzten Winkelgeschwindigkeit des Ausgleichsrotors wird eine Trajektorie erreicht, die bei einer Umdrehung des Hauptrotors in zwei Extreme ausschlägt.

Durch Ändern der Ausgangsstellungen des Hauptrotors zum Ausgleichsrotor kann die Trajektorie beliebig an der Achse des Hauptrotors gedreht werden.

Je nach Ausführungsform könnten die Ausgleichrotoren eine eigene Energieversorgung über Kabel, Schleifkontakte, Schleifringe und/oder Batterie, eine eigene Antriebseinheit und eine eigene Steuerung über Kabel oder Funk aufweisen. Vorteilhaft ist jedoch, wenn der vertikale Umsetzer ein mit dem Hauptrotor und dem Ausgleichrotor verbundenes Zugmittel umfasst, welches dazu ausgebildet ist, aus der Rotation des Hauptrotors 6 die Rotation des Ausgleichsrotors zu erwirken. Selbiges gilt für die horizontale Stabilisierung der Fördergutauflage, indem diese entweder mit jeweils einer Antriebseinheit mit Lageregelungssteuerung und Energieversorgung ausgestattet wird, oder bevorzugt durch ein Stabilisierungszugmittel aus der Rotation des Ausgleisrotors die Stabilisierung der Fördergutauflage erreicht wird. Dadurch kann ein System erzielt werden, bei welchem nur der Hauptrotor angetrieben bzw. gesteuert werden muss. Insbesondere bringt die bevorzugte Ausführungsform eine erhöhte Sicherheit mit sich, da durch Stoppen des Hauptrotors der gesamte vertikale Umsetzer zum Stillstand kommt.

In der genannten Ausführungsform ist ferner vorteilhaft, wenn der vertikale Umsetzer eine Übersetzung umfasst, die dazu ausgebildet ist, die Hauptwinkelgeschwindigkeit des Hauptrotors in die Ausgleichwinkelgeschwindigkeit des Ausgleichrotors umzuwandeln. Dadurch kann der Antrieb der Ausgleichrotoren allein durch mechanische Elemente des vertikalen Umsetzers erfolgen. Alternativ könnte auch vorgesehen werden, dass die Ausgleichrotoren eine interne Übersetzung aufweisen.

Um Fördergut besonders einfach auf den vertikalen Umsetzer zu bringen, ist bevorzugt, wenn die Fördergutauflage eine starre Gabel, eine durch aktive Förderkomponenten gebildete Gabel, beispielsweise durch Förderrollen oder Gurtspuren gebildete Gabel, oder ein aktives Förderelement, vorzugsweise ein Gurt oder Rollen, ist. Wenn die Fördergutauflage eigene aktive Förderelemente umfasst, wie einen angetriebenen Gurt oder Rollen, kann das Fördergut beispielsweise leicht von einem Förderweg auf die Fördergutauflage verbracht werden.

Besonders bevorzugt umfasst der vertikale Umsetzer zumindest zwei bis vier, der genannten Fördergutauflagen, die in gleichen Abständen um die Hauptrotationsachse angeordnet sind. Damit kann die Wartezeit für ein Fördergut auf eine Fördergutauflage verkürzt werden oder es können mehrere Fördergüter gleichzeitig bewegt werden. Bei mehr als vier Fördergutauflagen ist jedoch die Höhe und Breite des zu bewegenden Förderguts in Relation zum Hauptrotor stark eingeschränkt, sodass derartige Ausführungsformen nur für sehr spezielle Anwendungsfälle praktikabel sind.

Bevorzugt umfasst der vertikale Umsetzer eine Rotorpositionssensorik, welche dazu ausgebildet ist, die Geschwindigkeit des Hauptrotors und/oder des Ausgleichrotors zu erfassen, um die Bewegung der Fördergutauflage vorzugsweise in einem der Eckpunkte der Trajektorie zu verzögern oder zu anzuhalten. Dadurch kann erzielt werden, dass Fördergut besonders einfach bzw. schonend vom vertikalen Umsetzer abgeführt werden kann, wenn sich die Fördergutauflage in einem Eckpunkt der Trajektorie befindet.

Gemäß der Erfindung kann überdies eine Fördereinrichtung umfassend einen vertikalen Umsetzer gemäß einer der oben genannten Ausführungsformen und zumindest einen Förderweg geschaffen werden, wobei der Förderweg derart am vertikalen Umsetzer anschließt, dass ein Fördergut in zumindest einer Stellung der Fördergutauflage im Wesentlichen stetig vom Förderweg auf die Fördergutauflage verbracht werden kann. Diese Fördereinrichtung weist insbesondere die Vorteile des vertikalen Umsetzers wie oben erläutert auf. Ohne Förderweg könnte der vertikale Umsetzer jedoch weiterhin manuell beladen werden, um Fördergut in eine höhergelegene oder tiefergelegene Ebene zu verschaffen.

Die Fördereinrichtung weist insbesondere dann zusätzliche Vorteile auf, wenn der vertikale Umsetzer die Fördergutauflage in einer quadratischen Trajektorie bewegt und wobei der Förderweg an einem ersten Eckpunkt der quadratischen Trajektorie der Fördergutauflage anschließt. Der Förderweg wird somit an einer Stelle angeschlossen, an der die Fördereinrichtung eine minimale Geschwindigkeit aufweist, wodurch Fördergut schonender zwischen Fördergutauflage und Förderweg verbracht werden kann.

In einer ersten bevorzugten Ausführungsform umfasst der vertikale Umsetzer einen weiteren Förderweg, der an einem dem ersten Eckpunkt gegenüberliegendem Eckpunkt der quadratischen Trajektorie der Fördergutauflage anschließt, wodurch ein Z-Förderer mit den beschriebenen vorteilhaften Eigenschaften erzielt werden kann. Wenn der weitere Förderweg an einem Eckpunkt anschließt, der über oder unter dem Eckpunkt des erstgenannten Förderwegs liegt, kann zudem ein C-Förderer mit den beschriebenen vorteilhaften Eigenschaften erzielt werden. Bei einem derartigen Z- oder C-Förderer verlaufen die Förderwege bevorzugt horizontal quer zur Hauptrotationsachse.

Insbesondere Z-Förderer können auch derart ausgeführt werden, dass ein oder beide Förderwege parallel zur Hauptrotationsachse verlaufen. Dies wird vorzugsweise durch eine Ausführung mit einer starren Gabel als Fördergutauflage am vertikalen Umsetzer und je nach Orientierung des Förderweges eine aus Gurtspuren oder Rollen ausgeprägte gegengleiche Gabel als Übergabefläche erreicht. Neben dem vertikalen Transport des Fördergutes wird somit, aus einer Vogelperspektive gesehen, an den mit Gurtspuren gebildeten Übergabeflächen auch eine Umlenkung des Förderstromes um 90° erreicht.

In einer alternativen Ausführungsform umfasst die Fördereinrichtung drei weitere Förderwege, wobei jeder Förderweg an einem anderen Eckpunkt der quadratischen Trajektorie der Fördergutauflage anschließt. Diese Vierweg-Fördereinrichtung kann insbesondere als vertikale Weiche zwischen zwei parallel übereinanderliegenden Förderwegen eingesetzt werden. Hierbei ist folglich bevorzugt, wenn die Förderwege normal zur Hauptrotationsachse verlaufen.

Weiters ist vorteilhaft, wenn die Fördereinrichtung ein Kommissionierplatz ist, wobei der vertikale Umsetzer dazu ausgebildet ist, die Rotation des Hauptrotors und des Ausgleichrotors zu unterbrechen, wenn sich die Fördergutauflage in einem einer Kommissionierperson zugänglichen Eck der quadratischen Trajektorie befindet. Dadurch kann Fördergut beispielsweise von einer tiefergelegenen Transportebene auf die als Kommissionierposition benutzte Ebene der Bereitstellfläche gefördert werden, wodurch der Platzbedarf des Kommissionierplatzes besonders gering gestaltet werden kann.

Bevorzugt ist in der genannten Ausführungsform, wenn eine Steuerung des Hauptrotors mit einer Steuerung des Arbeitsplatzes verbunden ist und die Steuerung des Hauptrotors bevorzugt mit einem Arbeitsfortschritt am Arbeitsplatz synchronisiert ist.

Vorteilhafte und nicht einschränkende Ausführungsformen der Erfindung werden nachfolgend anhand der Zeichnungen näher erläutert.
Figur 1 zeigt eine Fördereinrichtung mit einem erfindungsgemäßen vertikalen Umsetzer.
Figur 2 zeigt eine quadratische Trajektorie eines mit dem vertikalen Umsetzer beförderten Förderguts.
Figur 3 zeigt eine Fördereinrichtung in einer zu Figur 1 alternativen Ausführungsform.
Figur 4 zeigt einen erfindungsgemäßen Kommissionierplatz mit dem erfindungsgemäßen vertikalen Umsetzer.

Die Figuren 5a bis 5f zeigen verschiedene realisierbare Trajektorien in Relation zu unterschiedlich dimensionierten Ausgleichsrotoren. Figur 5f zeigt eine nicht beanspruchte Ausführungsform.

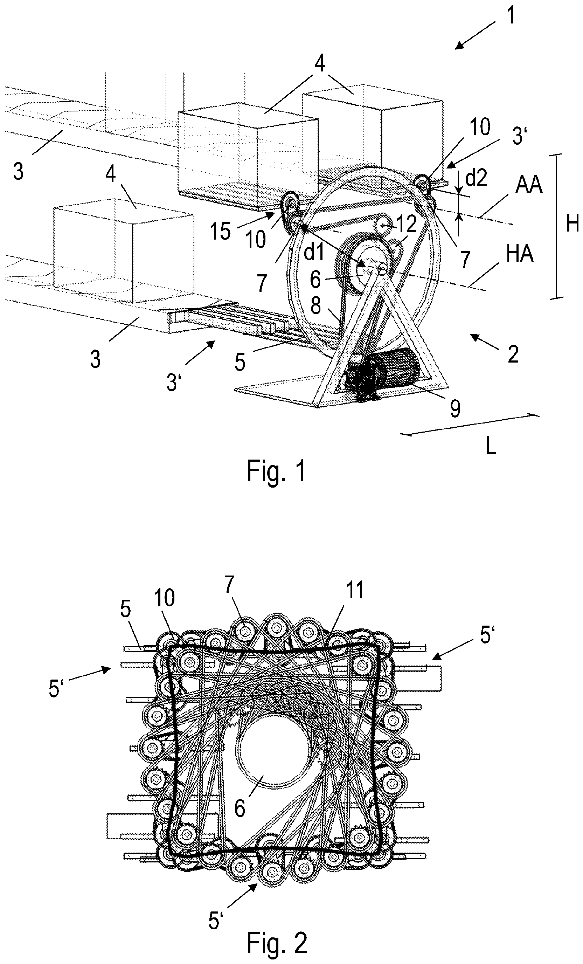

Figur 1 zeigt eine Fördereinrichtung 1 mit einem vertikalen Umsetzer 2, an dem zwei Förderwege 3 anschließen, sie sich auf verschiedenen Höhen befinden. Im gezeigten Beispiel befördert der tiefergelegene Förderweg 3 Fördergut 4 in Richtung des vertikalen Umsetzers 2, der das Fördergut 4 - wie unten im Detail erläutert - auf eine Höhe H hebt, d.h. vertikal umsetzt. Zusätzlich versetzt der vertikale Umsetzer 1 in dieser Ausführungsform das Fördergut 4 um eine horizontale Länge L. Die Begriffe "horizontal" und "vertikal" werden hierin bezüglich einer Betriebsposition der Fördereinrichtung 1 bzw. des vertikalen Umsetzers 2 verstanden.

Der vertikale Umsetzer 2 umfasst drei als starre Gabeln ausgeprägte Fördergutauflagen 5 zum Heben des Förderguts 3, wobei jedoch auch nur eine oder zwei Fördergutauflagen 5 oder auch mehr als drei Fördergutauflagen 5 vorgesehen werden könnten. Die Übergabeflächen 3' der beiden Förderwege 3 sind als durch Gurtspuren gebildete gegengleiche Gabeln ausgeführt. Zum Heben der Fördergutauflagen 5 umfasst der vertikale Umsetzer 2 einen Hauptrotor 6, an dem Knotenpunkte 7 in Abständen d1 verbunden sind, wobei der Hauptrotor 6 dazu ausgebildet ist, die Knotenpunkte 7 um eine im Wesentlichen horizontal verlaufende Hauptrotationsachse HA zu rotieren. Zu diesem Zweck kann der Hauptrotor beispielsweise über einen Riemen 8 mit einem Antriebsmotor 9 verbunden sein.

Der Hauptrotor 7 kann beispielsweise als Rotationsscheibe mit Radius d1 ausgebildet sein oder auch als Ring mit Verstrebungen, wobei die Knotenpunkte 7 am Außendurchmesser der Rotationsscheibe bzw. des Rings vorliegen. Alternativ könnten auch nur Streben als Abstandshalter, jeweils mit einer Länge d1, für die Knotenpunkte 7 vorgesehen sein, sodass die Streben gemeinsam um die Hauptachse HA rotieren.

Jede Fördergutauflage 5 ist mittels eines Ausgleichrotors 10 an einem anderen Knotenpunkt 7 des Hauptrotors 6 gekoppelt, sodass die Fördergutauflage 5 einen zweiten Abstand d2 zum Knotenpunkt 7 einnimmt. Die Ausgleichrotoren 10 rotieren die jeweilige Fördergutauflage 5 um eine Ausgleichrotationsachse AA, die im Wesentlichen horizontal durch den jeweiligen Knotenpunkt 7 parallel zur Hauptrotationsachse HA verläuft. Die Ausgleichrotoren 10 dienen dazu, die kreisförmige Bewegung des Hauptrotors 6 auszugleichen, wie im Folgenden erläutert wird.

Figur 2 zeigt, dass sich die Fördergutauflage 5 durch die Rotation des jeweiligen Ausgleichrotors 10 gegenüber dem Hauptrotor 6 entlang einer im Wesentlichen quadratischen Trajektorie 11 bewegt. Figur 2 zeigt dabei überlagert eine 120° Rotation eines Hauptrotors in 15° Schritten mit drei gleichverteilten Knotenpunkten 7 mit jeweils einem Ausgleichsrotor 10 mit Fördergutauflage 5. Somit sind vierundzwanzig (24) verschiedene Stellungen der Fördergutauflage 5 während eines einzigen vollständigen Umlaufs des Hauptrotors 6 ersichtlich.

Um die quadratische Trajektorie 11 zu erzielen, rotieren der Hauptrotor 6 und der Ausgleichrotor 10 in entgegengesetzte Richtungen, einer im Uhrzeigersinn und einer gegen den Uhrzeigersinn. Der Ausgleichrotor 10 rotiert die Fördergutauflage 5 mit einer Ausgleichwinkelgeschwindigkeit ω2, die dreimal höher ist als eine Hauptwinkelgeschwindigkeit ω1, mit welcher der Hauptrotor 6 den Knotenpunkt 7 rotiert, wodurch zusammen mit der Wahl von d2 = 20% * d1 eine im Wesentlichen quadratische Trajektorie erreicht wird.

In Figur 2 sind die Fördergutauflagen 5' in denselben Positionen, wie sie in Figur 1 gezeigt sind.

Weiters ist der vertikale Umsetzer 2 in Figur 2 derart eingerichtet, dass die Fördergutauflage 5 nur im Wesentlichen horizontal und vertikal bewegt wird. Dazu hält der Ausgleichrotor 10 die Fördergutauflage 5 in einer tiefstmöglichen Stellung, wenn der Hauptrotor 6 den Knotenpunkt 7 an einer höchstmöglichen Stellung hält. Alternativ wäre es auch möglich, andere Ausrichtungen der quadratischen Trajektorie 11 einzustellen, beispielsweise um die Ecken der Trajektorie 11 horizontal und vertikal in möglichst weit ausgelenkte Stellungen zu bringen, d.h. das Quadrat wird auf eine der Ecken gestellt.

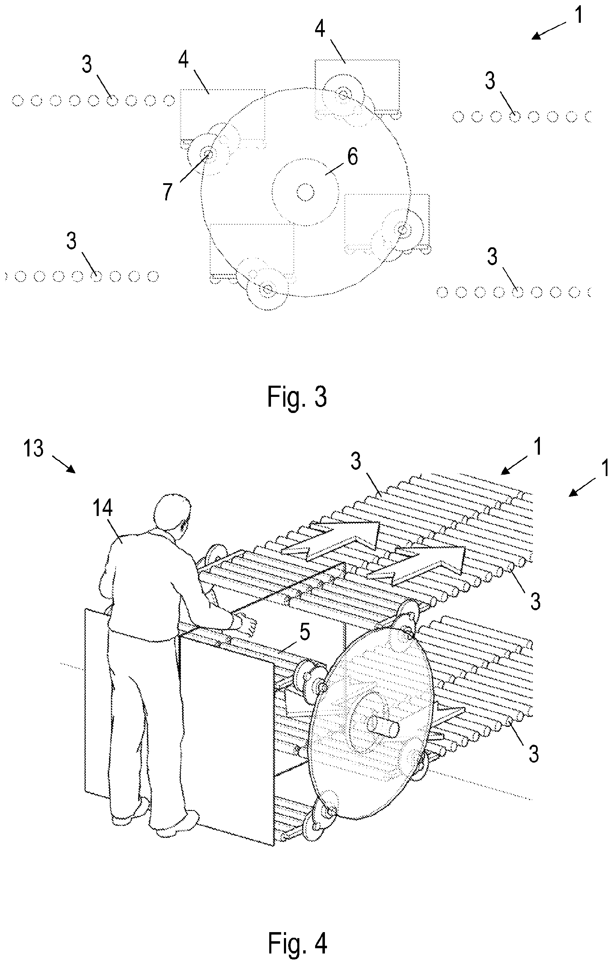

Die Förderwege 3 in Figur 3 sind derart positioniert, dass die Fördergutauflagen 5 vertikal passieren, und oberhalb des oberen Förderweges bzw. unterhalb des unteren Förderweges die horizontale Bewegung durchführen, wodurch eine einfache Übernahme des Fördergutes vom Förderweg 3 auf den vertikalen Umsetzer 2 und eine einfache Übergabe auf den Förderweg 3 vom vertikalen Umsetzer 2 möglich ist.

Im Allgemeinen sind der Hauptrotor 6 und der Ausgleichrotor 10 dazu ausgebildet, um einen Winkel von 360° zu rotieren, sodass sie beispielsweise periodisch um die jeweiligen Hauptrotationsachse HA bzw. Ausgleichrotationsachse AA rotieren. Alternativ könnte der Winkelbereich, um den der Hauptrotor 6 bzw. der Ausgleichrotor 10 rotiert, auch eingeschränkt werden, sodass die Trajektorie 11 beispielsweise nur von der linken oder rechten vertikalen Linie des in Figur 2 gezeigten Quadrats gebildet wird.

Durch eine ungleichmäßige bzw. unstetige Ausgleichwinkelgeschwindigkeit ω2 des Ausgleichrotors 10 können auch asymmetrische bzw. andere Formen der Trajektorie 11 erzeugt werden. Beispielsweise könnte die quadratische Trajektorie 11 von Figur 2 derart abgewandelt werden, dass der Ausgleichrotor 10 im linken unteren Eck der Trajektorie eine Stellung einnimmt, bei der die Fördergutauflage 5 der Hauptrotationsachse HA zugewandt ist.

Zurückkommend auf Figur 1 ist ersichtlich, dass der Hauptrotor 6 und die Ausgleichrotoren 10 mit einem Zugmittel 12 verbunden sind, beispielsweise kraftschlüssig mit einem Riemen oder formschlüssig mit einer Kette oder Zahnriemen. Dadurch kann die Rotation des Hauptrotors 6 auf die Ausgleichrotoren 10 übertragen werden. In einer Ausführungsform ist keine externe Übersetzung vorgesehen und die Ausgleichrotoren 10 verfügen beispielsweise selbst über eine interne Steuerung der Ausgleichwinkelgeschwindigkeit ω2. Bevorzugt verfügt der vertikale Umsetzer 2 jedoch über Übersetzungen, um mechanisch die Hauptwinkelgeschwindigkeit ω1 in die Ausgleichwinkelgeschwindigkeit ω2 umzuwandeln. Wie in Figur 1 dargestellt kann der vertikale Umsetzer hierfür beispielsweise Kettenräder oder Zahnscheiben in Kombination mit einem Zugmittel aufweisen.

Der vertikale Umsetzer 2 ist überdies dazu ausgebildet, die Fördergutauflage 5 während der Rotation um die Hauptrotationsachse HA bzw. die Ausgleichrotationsachse AA im Wesentlichen horizontal zu halten, sodass das Fördergut 4 nicht von der Fördergutauflage rutscht. Dies kann entweder durch einen zusätzlichen, versetzt angeordneten Hauptrotor 6 erzielt werden, wie aus dem Stand der Technik bekannt. Bevorzugt ist hierfür jedoch eine geeignete Stabilisierungsvorrichtung, z.B. eine formschlüssige Kopplung der Fördergutauflage 5 mit dem jeweiligen Knotenpunkt 7 mittels eines Stabilisierungszugmittels 15 am jeweiligen Ausgleichrotor 10 vorgesehen.

Der vertikale Umsetzer 2 kann selbst dann Verwendung finden, wenn keine Förderwege 3 an diesen angeschlossen sind. Dazu kann dieser beispielsweise manuell beladen und entladen werden. Für den Einsatz in einer Fördereinrichtung 1 schließt jedoch zumindest ein Förderweg 3 derart an den vertikalen Umsetzer 2 an, dass das Fördergut 4 in zumindest einer Stellung der Fördergutauflage 5 bei seiner Rotation um die Hauptrotationsachse HA bzw. die Ausgleichrotationsachse AA im Wesentlichen stetig vom Förderweg 3 auf die Fördergutauflage 5 verbracht, beispielsweise verschoben, werden kann, was in diesem Zusammenhang bedeutet, dass der Förderweg 3 und die Fördergutauflage in der genannten Stellung gemeinsam eine ebene Fläche bilden. Wenn der vertikale Umsetzer 2 eine quadratische Trajektorie 11 aufweist, ist bevorzugt, wenn der Förderweg 3 an einem ersten Eckpunkt der quadratischen Trajektorie 11 der Fördergutauflage 5 anschließt, da diese dort durch den Umkehrpunkt der Rotationsbewegungen des Hauptrotors 6 und des Ausgleichrotors 10 eine besonders langsame Geschwindigkeit aufweist.

Der Förderweg 3 kann beispielsweise ein angetriebenes Förderband sein, welches das Fördergut 4 automatisch in Richtung des vertikalen Umsetzers 2 oder von diesem fort bringt. Alternativ kann der Förderweg 3 beispielsweise durch Rollen gebildet werden, wie dies in Figur 3 schematisch dargestellt ist. Die Rollen können unangetriebenen oder angetrieben ausgestaltet werden.

Wie in der Ausführungsform von Figur 1 gezeigt, kann die Fördergutauflage 5 als starre Gabel ausgebildet sein, die mit einer entsprechend gegengleichen starren Gabel des Förderwegs 3 zusammenwirkt. Befindet sich die Fördergutauflage 5 somit in einer Stellung, in der sie möglichst nahe am Förderweg 3 liegt, kann das Fördergut 4 stetig vom Förderweg 3 auf die Fördergutauflage 5 verbracht werden. Der Gabeleingriff der Fördergutauflage 5 und dem Förderweg 3 hat den Vorteil, dass das Fördergut 4 vorab auf die Gabel des Förderwegs 3 gestellt werden und danach automatisch von der Fördergutauflage 5 aufgegriffen werden kann, sobald die Fördergutauflage 5 die entsprechende Stellung einnimmt.

Alternativ könnte die Fördergutauflage 5 nicht mit dem Förderweg 3 eingreifend ausgebildet sein, sondern an diesen lediglich anschließen. Figur 3 zeigt eine derartige Ausführungsform, bei der die Fördergutauflage 5 aus angetriebenen Rollen besteht. Die Rollen der Fördergutauflage 5 schließen bündig an die Rollen des Förderweges 3 an. Alternativ könnte die Fördergutauflage 5 eine starre Platte, unangetriebene Rollen oder ein anderes aktives Förderelement wie beispielsweise ein Förderband sein.

Die Fördergutauflage 5 ist derart ausgeführt, dass das Fördergut 4 stabil vom vertikalen Umsetzer 2 umgesetzt werden kann, wobei es insbesondere durch die bei der Horizontalbewegung entstehenden Querkräfte zu keinem Verschieben oder Verrutschen des Fördergutes 4 kommen soll. Aus diesem Grund können vor allem bei unangetriebenen Rollen Vorkehrungen zum Bremsen der Rollen getroffen werden. Hier hat es sich als vorteilhaft erwiesen, die Bremse an den Positionen der Fördergutübernahme beziehungsweise Fördergutübergabe an den Förderweg 3 automatisch zu lösen, um ein leichteres Überschieben des Fördergutes 4 zu ermöglichen.

Je nachdem, an welcher Stelle der Trajektorie 11 die Förderwege 3 an den vertikalen Umsetzer 2 anschließen, können verschiedene Typen von Fördereinrichtungen 1 erzielt werden. Wenn einer der Förderwege 3 an einem ersten Eckpunkt der quadratischen Trajektorie 11 der Fördergutauflage 5 anschließt und ein zweiter Förderweg 3 an einem dem ersten Eckpunkt gegenüberliegenden Eckpunkt der quadratischen Trajektorie 11, kann ein sogenannter Z-Förderer erzielt werden. Wenn der zweite Förderweg 3 hingegen an einem Eckpunkt 3 der quadratischen Trajektorie 11 anschließt, der über oder unter dem ersten Eckpunkt liegt, kann ein sogenannter C-Förderer erzielt werden.

Bei Z-Förderern oder C-Förderern verlaufen die Förderwege 3 bevorzugt normal zur Hauptrotationsachse HA. Der vertikale Umsetzer 2 erlaubt auch eine Ausführungsform, bei der gemäß Figur 1 die Förderwege 3 parallel zur Hauptrotationsachse HA verlaufen, wodurch durch den vertikalen Umsetzer 2 ein Umkehrpunkt der Fördereinrichtung 1 erzielt werden kann.

Wie in Figur 3 gezeigt kann der vertikale Umsetzer 2 auch als Weiche zwischen zwei übereinander verlaufenden Förderwegen 3 eingesetzt werden. Hierbei liegen insgesamt vier Förderwege 3 vor, wobei jeder Förderweg an einem anderen Eckpunkt der quadratischen Trajektorie 11 der Fördergutauflage 5 anschließt. Im Gegensatz zur Ausführungsform der Figur 1 verlaufen die Förderwege 3 hier normal zur Hauptrotationsachse HA. Bei dem gezeigten Beispiel muss zumindest einer der bedienten Förderwege 3 als abziehender Förderweg und zumindest einer als eingehender Förderweg betrieben werden, wodurch der vertikale Umsetzer 2 als 2:2 Auskreuzung, 1:3 Aufteilung oder 3:1 Zusammenführung einsetzbar ist. Bei dem gezeigten Beispiel ist es in manchen Einsatzbereichen vorteilhaft, wenn sich die Richtung der Rotation des Hauptrotors 3 umkehren lässt, da hierdurch eine einfache Möglichkeit geschaffen wird, das Fördergut 4 auf kürzestem Wege vertikal oder horizontal zu befördern. Die Möglichkeit der Umkehrung der Rotationsrichtung kann jedoch auch in anderen Ausführungsformen eingesetzt werden.

Figur 4 zeigt den Einsatz der Fördereinrichtung 1 als Kommissionierplatz 13. Dieser ist derart ausgebildet, dass die Fördergutauflage 5 in einer Stellung in einem oberen Eck der quadratischen Trajektorie 11 für eine Kommissionierperson 14 zugänglich ist. Um der Kommissionierperson 14 Zeit zu geben, das Fördergut 4 zu bearbeiten, unterbrechen der Hauptrotor 6 und der Ausgleichrotor 10 ihre Rotation um die jeweilige Achse HA, AA, wenn sich die Fördergutauflage 5 in der genannten Stellung befindet.

Im gezeigten Beispiel wird Fördergut 4 von einer unteren Ebene zum vertikalen Umsetzer 2 zugeführt. Durch die Rotation des Hauptrotors 6 im Uhrzeigersinn und des Ausgleichrotors 10 gegen den Uhrzeigersinn wird das Fördergut 4 im Wesentlichen vertikal auf eine Höhe H gehoben, die von der Kommissionierperson 14 leicht zugänglich ist. An dieser Stelle wird die Rotation vorteilhaft für einen Zeitraum unterbrochen, der entweder vorbestimmt ist oder von der Kommissionierperson 14 bestimmt wird, beispielsweise durch aktives Anschalten des vertikalen Umsetzers 2 durch Knopfdruck. Danach wird die Rotation des Hauptrotors 6 und des Ausgleichrotors 10, jeweils in der genannten Richtung, fortgesetzt, um das Fördergut 4 auf einen Förderweg 3 auf einer oberen Ebene abzuführen.

In der Ausführungsform von Figur 4 ist ferner ein zweiter vertikaler Umsetzer 2 angeordnet, um eine zweite Fördereinrichtung 1 zu schaffen. In diesem Kommissioniersystem kann die erste Fördereinrichtung 1 beispielsweise ein zu befüllendes Paket anliefern. Die zweite Fördereinrichtung 1 liefert Fördergut 4 an, welches Gegenstände enthält, die von der Kommissionierperson 14 in das Paket gelegt werden. Daraufhin kann die erste Fördereinrichtung 1 das Paket wieder vom Kommissionierplatz 13 abführen und das nächste leere Paket anliefern. In dieser Ausführungsform wird die Rotation beider Umsetzer 2 von einer rechnergestützen Steuerung übernommen, wobei der Kommissionierer eine erfolgte Kommissionierung bestätigt und die Steuerung daraufhin das zu befüllende Paket oder das Quell-Fördergut oder beides durch Aktivierung des jeweiligen Hauptrotors 6 wechselt.

Alternativ zu den genannten Ausführungsformen, bei der die Trajektorie 11 als Quadrat ausgebildet ist, können auch andere Formen erzielt werden, wobei die erfindungsgemäßen Trajektorien im Anspruch 1 definiert werden. Beispielsweise können die Winkelgeschwindigkeiten ω1, ω2 und die Abstände d1, d2 derart gewählt werden, dass ein Dreieck erzielt wird.

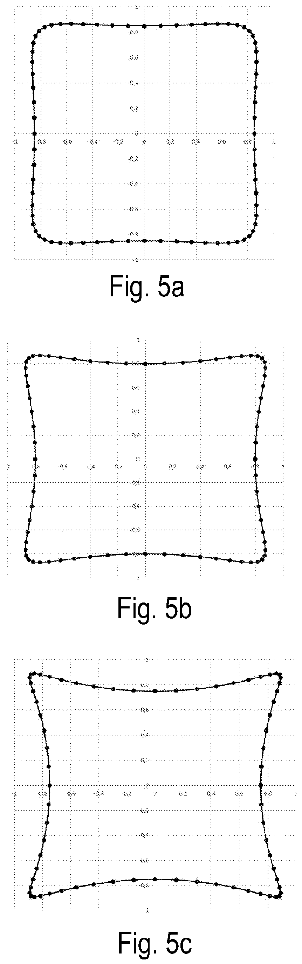

Sechs beispielhafte Trajektorien sind in den Figuren 5a bis 5f dargestellt. Die Figuren 5a bis 5c zeigen jeweils im Wesentlichen quadratische Trajektorien 11, wobei die Fördergutauflage 5 nur entlang im Wesentlichen horizontalen und vertikalen Richtungen bewegt wird. Gemäß Figur 5a beträgt ω2 = -3 * ω1 und d2 = 15% * d1. Gemäß Figur 5b beträgt ω2 = -3 * ω1 und d2 = 20% * d1. In Figur 5c beträgt ω2 = -3 * ω1 und d2 = 25% * d1.

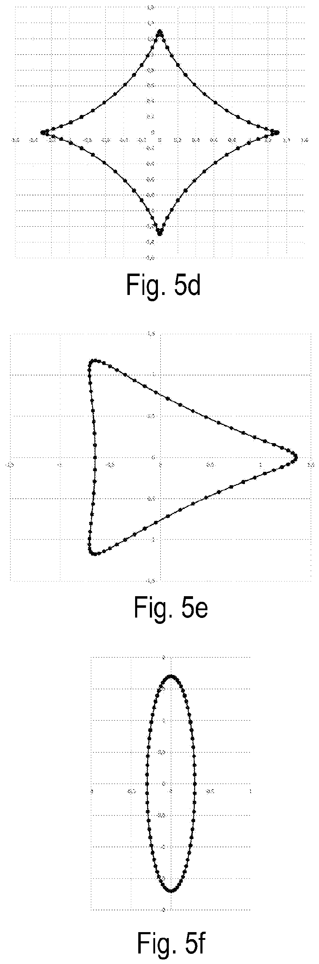

Figur 5d zeigt eine im Wesentlichen quadratische Trajektorie 11, wobei die Ecken der Trajektorie 11 horizontal und vertikal in möglichst weit ausgelenkte Stellungen gebracht sind. Hierbei beträgt ω2 = -3 * ω1 und d2 = 30% * d1.

Im Allgemeinen wird für quadratische Trajektorien ω2 = -3 * ω1 gewählt, wobei das Verhältnis d2/d1 10% bis 40%, vorzugsweise 17% bis 18%, betragen kann.

Figur 5e zeigt eine im Wesentlichen dreieckige Trajektorie 11 mit ω2 = -2 * ω1 und d2 = 30% * d1. Im Allgemeinen wird für dreieckige Trajektorien ω2 = -2 * ω1 gewählt, wobei das Verhältnis d2/d1 20% bis 60%, vorzugsweise 25% bis 35%, betragen kann. Für eine im Wesentlichen fünfeckige Trajektorie 11 wird ω2 = -4 * ω1 gewählt, wobei das Verhältnis d2/d1 10% bis 40%, vorzugsweise 15% bis 20%, betragen kann.

Gemäß Figur 5f (nicht beansprucht) kann auch eine elliptische Trajektorie 11 erreicht werden mit ω2 = -1 * ω1 und d2 = 70% * d1. Im Allgemeinen wird für elliptische Trajektorien ω2 = -1 * ω1 gewählt, wobei das Verhältnis d2/d1 10% bis 200%, vorzugsweise 60% bis 80% betragen kann. Hierbei stellt d1 = d2 einen erfindungsgemäßen Sonderfall dar, bei der eine lineare, vorzugsweise vertikale, Bewegung der Fördergutauflage zustande kommt. Dabei ist zu beachten, dass nur eine Fördergutauflage 5 einsetzbar ist.

## Patentansprüche

1. Vertikaler Umsetzer (2) für eine Fördereinrichtung (1), umfassend einen Hauptrotor (6), einen Ausgleichsrotor (10) und eine Fördergutauflage (5), wobei der Hauptrotor (6) dazu ausgebildet ist, zumindest einen Knotenpunkt (7) für die Fördergutauflage (5) um eine im Wesentlichen horizontal verlaufende Hauptrotationsachse (HA) zu rotieren, wobei der Knotenpunkt (7) einen ersten Abstand (d1) zur Hauptrotationsachse (HA) einnimmt und der vertikale Umsetzer (2) dazu ausgebildet ist, die Fördergutauflage (5) während der Rotation um die Hauptrotationsachse (HA) im Wesentlichen horizontal zu halten,
wobei die Fördergutauflage (5) mittels des Ausgleichrotors (10) am Knotenpunkt (7) des Hauptrotors (6) gekoppelt ist, wobei der Ausgleichrotor (10) dazu ausgebildet ist, die Fördergutauflage (5) um eine im Wesentlichen parallel zur Hauptrotationsachse (HA) durch den Knotenpunkt (7) verlaufende Ausgleichrotationsachse (AA) zu rotieren, und wobei die Fördergutauflage (5) einen zweiten Abstand (d2) zur Ausgleichrotationsachse (AA) einnimmt, wobei der Hauptrotor (6) und der Ausgleichrotor (10) dazu ausgebildet sind, in entgegengesetzte Richtungen zu rotieren, **dadurch gekennzeichnet, dass** der Ausgleichrotor (10) dazu ausgebildet ist, die Fördergutauflage (5) mit einer Ausgleichwinkelgeschwindigkeit (ω2) zu rotieren, die dreimal höher ist als eine Hauptwinkelgeschwindigkeit (ω1), mit welcher der Hauptrotor (6) den Knotenpunkt (7) rotiert, und wobei der erste und der zweite Abstand (d1, d2) derart gewählt sind, dass sich die Fördergutauflage (5) im Betrieb des vertikalen Umsetzers (2) entlang einer im Wesentlichen quadratischen Trajektorie (11) bewegt, oder dass
der Ausgleichrotor (10) dazu ausgebildet ist, die Fördergutauflage (5) mit einer Ausgleichwinkelgeschwindigkeit (co2) zu rotieren, die zweimal höher ist als eine Hauptwinkelgeschwindigkeit (coi), mit welcher der Hauptrotor (6) den Knotenpunkt (7) rotiert, und wobei der erste und der zweite Abstand (dl, d2) derart gewählt sind, dass sich die Fördergutauflage (5) im Betrieb des vertikalen Umsetzers (2) entlang einer im Wesentlichen dreieckigen Trajektorie (11) bewegt, oder dass
der Ausgleichrotor (10) dazu ausgebildet ist, die Fördergutauflage (5) mit einer Ausgleichwinkelgeschwindigkeit (co2) zu rotieren, die gleich der Hauptwinkelgeschwindigkeit (coI) ist, mit welcher der Hauptrotor (6) den Knotenpunkt (7) rotiert, und wobei der erste und der zweite Abstand (dl, d2) gleich groß gewählt sind, wodurch sich die Fördergutauflage (5) im Betrieb des vertikalen Umsetzers (2) entlang einer im Wesentlichen linearen Trajektorie (11) bewegt.

2. Vertikaler Umsetzer (2) nach Anspruch 1, wobei sich die Fördergutauflage (5) im Betrieb des vertikalen Umsetzers (2) entlang einer im Wesentlichen quadratischen Trajektorie (11) bewegt und der vertikale Umsetzer (2) dazu ausgebildet ist, die Fördergutauflage (5) nur entlang im Wesentlichen horizontalen und vertikalen Richtungen zu bewegen.

3. Vertikaler Umsetzer (2) nach Anspruch 1, wobei sich die Fördergutauflage (5) im Betrieb des vertikalen Umsetzers (2) entlang einer im Wesentlichen linearen Trajektorie (11) bewegt und der vertikale Umsetzer (2) dazu ausgebildet ist, die Fördergutauflage (5) nur entlang im Wesentlichen vertikalen Richtungen zu bewegen.

4. Vertikaler Umsetzer (2) nach einem der Ansprüche 1 bis 3, umfassend ein mit dem Hauptrotor (6) und dem Ausgleichrotor (10) verbundenes Zugmittel (12), welches dazu ausgebildet ist, aus der Rotation des Hauptrotors (6) die Rotation des Ausgleichrotors (10) zu erwirken.

5. Vertikaler Umsetzer (2) nach Anspruch 4, ferner umfassend eine Übersetzung (13), die dazu ausgebildet ist, die Hauptwinkelgeschwindigkeit (ω1) des Hauptrotors (6) in die Ausgleichwinkelgeschwindigkeit (ω2) des Ausgleichrotors (10) umzuwandeln.

6. Vertikaler Umsetzer (2) nach einem der Ansprüche 1 bis 5, wobei die Fördergutauflage (5) eine starre Gabel, eine durch aktive Förderkomponenten gebildete Gabel, beispielsweise durch Förderrollen oder Gurtspuren gebildete Gabel, oder ein aktives Förderelement, vorzugsweise ein Gurt oder Rollen, ist.

7. Vertikaler Umsetzer (2) nach einem der Ansprüche 1 bis 6, umfassend zumindest zwei, bevorzugt drei oder vier, der genannten Fördergutauflagen (5), deren zugeordnete Knotenpunkte (7) gleichverteilt um die Hauptrotationsachse (HA) angeordnet sind.

8. Vertikaler Umsetzer (2) nach einem der Ansprüche 1 bis 7, umfassend eine Rotorpositionssensorik, welche dazu ausgebildet ist, die Geschwindigkeit des Hauptrotors und/oder des Ausgleichrotors zu erfassen, um die Bewegung der Fördergutauflage vorzugsweise in einem der Eckpunkte der Trajektorie zu verzögern oder anzuhalten.

9. Fördereinrichtung (1) umfassend einen vertikalen Umsetzer (2) nach einem der Ansprüche 1 bis 8 und zumindest einen Förderweg (3), welcher derart am vertikalen Umsetzer (2) anschließt, dass ein Fördergut (4) in zumindest einer Stellung der Fördergutauflage (5) im Wesentlichen stetig vom Förderweg (3) auf die Fördergutauflage (5) verbracht werden kann.

10. Fördereinrichtung (1) nach Anspruch 9 umfassend einen vertikalen Umsetzer (2) nach einem der Ansprüche 1, 2 oder 4 bis 8 wobei sich die Fördergutauflage (5) im Betrieb des vertikalen Umsetzers (2) entlang einer im Wesentlichen quadratischen Trajektorie (11) bewegt und wobei der Förderweg (3) an einem ersten Eckpunkt der quadratischen Trajektorie (11) der Fördergutauflage (5) anschließt.

11. Fördereinrichtung (1) nach Anspruch 10, umfassend einen weiteren Förderweg (3), der an einem dem ersten Eckpunkt gegenüberliegendem Eckpunkt der quadratischen Trajektorie (11) der Fördergutauflage (5) anschließt.

12. Fördereinrichtung (1) nach Anspruch 10, umfassend einen weiteren Förderweg (3), der an einem über oder unter dem ersten Eckpunkt liegenden Eckpunkt der quadratischen Trajektorie (11) der Fördergutauflage (5) anschließt.

13. Fördereinrichtung (1) umfassend einen vertikalen Umsetzer (2) nach einem der Ansprüche 1 bis 8 und zumindest zwei, bevorzugt drei oder vier Förderwege (3), wobei jeder Förderweg (3) vorzugsweise an einem anderen Eckpunkt der Trajektorie (11) der Fördergutauflage (5) anschließt.

14. Fördereinrichtung (1) nach einem der Ansprüche 9 bis 13, wobei zumindest einer der Förderwege (3) parallel zur Hauptrotationsachse (HA) verläuft.

15. Fördereinrichtung (1) nach einem der Ansprüche 9 bis 14, wobei zumindest einer der Förderwege (3) normal zur Hauptrotationsachse (HA) verläuft.

16. Fördereinrichtung (1) umfassend einen vertikalen Umsetzer (2) nach einem der Ansprüche 1 bis 8, wobei die Fördereinrichtung (1) Teil eines Arbeitsplatzes, vorzugsweise eines Kommissionierplatzes (13), ist und wobei der vertikale Umsetzer (2) dazu ausgebildet ist, die Rotation des Hauptrotors (6) und des Ausgleichrotors (10) zu unterbrechen, wenn sich die Fördergutauflage (5) in einem einer Kommissionierperson (14) zugewandten Eck der Trajektorie (11) befindet.

17. Fördereinrichtung (1) nach Anspruch 16, wobei eine Steuerung des Hauptrotors mit einer Steuerung des Arbeitsplatzes verbunden ist und die Steuerung des Hauptrotors bevorzugt mit einem Arbeitsfortschritt am Arbeitsplatz synchronisiert ist.

## Claims

1. A vertical transfer device (2) for a conveying device (1), comprising a main rotor (6), a compensation rotor (10) and a conveyed goods support (5), wherein the main rotor (6) is designed for rotating at least one node point (7) for the conveyed goods support (5) about a main axis of rotation (HA) extending essentially horizontally, the node point (7) being at a first distance (d1) from the main axis of rotation (HA) and the vertical transfer device (2) being designed for keeping the conveyed goods support (5) essentially horizontal during the rotation about the main axis of rotation (HA),
wherein the conveyed goods support (5) is coupled at the node point (7) of the main rotor (6) by means of the compensation rotor (10), the compensation rotor (10) being designed for rotating the conveyed goods support (5) about a compensation axis of rotation (AA) extending essentially in parallel to the main axis of rotation (HA) through the node point (7), and the conveyed goods support (5) being at a second distance (d2) from the compensation axis of rotation (AA), wherein the main rotor (6) and the compensation rotor (10) are designed for rotating in opposite directions,
**characterized in that** the compensation rotor (10) is designed for rotating the conveyed goods support (5) at a compensating angular velocity (ω2) that is three times higher than a main angular velocity (ω1) at which the main rotor (6) rotates the node point (7), and wherein the first and second distances (d1, d2) are chosen such that the conveyed goods support (5) moves along an essentially square trajectory (11) during the operation of the vertical transfer device (2),
or that the compensation rotor (10) is designed for rotating the conveyed goods support (5) at a compensating angular velocity (ω2) that is two times higher than a main angular velocity (ω1) at which the main rotor (6) rotates the node point (7), and wherein the first and second distances (d1, d2) are chosen such that the conveyed goods support (5) moves along an essentially triangular trajectory (11) during the operation of the vertical transfer device (2),
or that the compensation rotor (10) is designed for rotating the conveyed goods support (5) at a compensating angular velocity (ω2) that is equal to the main angular velocity (ω1) at which the main rotor (6) rotates the node point (7), and wherein the first and second distances (d1, d2) are chosen to be of equal size, whereby the conveyed goods support (5) moves along an essentially linear trajectory (11) during the operation of the vertical transfer device (2).

2. The vertical transfer device (2) according to claim 1, wherein the conveyed goods support (5) moves along an essentially square trajectory (11) during the operation of the vertical transfer device (2) and the vertical transfer device (2) is designed for moving the conveyed goods support (5) only along essentially horizontal and vertical directions.

3. The vertical transfer device (2) according to claim 1, wherein the conveyed goods support (5) moves along an essentially linear trajectory (11) during the operation of the vertical transfer device (2) and the vertical transfer device (2) is designed for moving the conveyed goods support (5) only along essentially vertical directions.

4. The vertical transfer device (2) according to any of claims 1 to 3, comprising a traction means (12) connected to the main rotor (6) and the compensation rotor (10), the traction means being designed for effecting the rotation of the compensation rotor (10) from the rotation of the main rotor (6).

5. The vertical transfer device (2) according to claim 4, furthermore comprising a transmission (13) which is designed for converting the main angular velocity (ω1) of the main rotor (6) into the compensating angular velocity (ω2) of the compensation rotor (10).

6. The vertical transfer device (2) according to any of claims 1 to 5, wherein the conveyed goods support (5) is a rigid fork, a fork formed by active conveyor components, e.g., a fork formed by conveyor rollers or belt tracks, or an active conveyor element, preferably a belt or rollers.

7. The vertical transfer device (2) according to any of claims 1 to 6, comprising at least two, preferably three or four, of the above-mentioned conveyed goods supports (5), the associated node points (7) thereof being arranged around the main axis of rotation (HA) in an equally distributed manner.

8. The vertical transfer device (2) according to any of claims 1 to 7, comprising a rotor position sensor system which is designed for detecting the speed of the main rotor and/or the compensation rotor in order to delay or stop the movement of the conveyed goods support, preferably in one of the corner points of the trajectory.

9. A conveying device (1) comprising a vertical transfer device (2) according to any of claims 1 to 8 and at least one conveyor path (3) connecting to the vertical transfer device (2) in such a way that an item to be conveyed (4) can be moved essentially steadily from the conveyor path (3) to the conveyed goods support (5) in at least one position of the conveyed goods support (5).

10. The conveying device (1) according to claim 9, comprising a vertical transfer device (2) according to any of claims 1, 2 or 4 to 8, wherein the conveyed goods support (5) moves along an essentially square trajectory (11) during the operation of the vertical transfer device (2) and, wherein the conveyor path (3) connects to a first corner point of the square trajectory (11) of the conveyed goods support (5).

11. The conveying device (1) according to claim 10, comprising a further conveyor path (3) connecting to a corner point of the square trajectory (11) of the conveyed goods support (5) which is opposite to the first corner point.

12. The conveying device (1) according to claim 10, comprising a further conveyor path (3) connecting to a corner point of the square trajectory (11) of the conveyed goods support (5) which is located above or below the first corner point.

13. A conveying device (1) comprising a vertical transfer device (2) according to any of claims 1 to 8 and at least two, preferably three or four, conveyor paths (3), each conveyor path (3) preferably connecting to a different corner point of the trajectory (11) of the conveyed goods support (5).

14. The conveying device (1) according to any of claims 9 to 13, wherein at least one of the conveyor paths (3) runs parallel to the main axis of rotation (HA).

15. The conveying device (1) according to any of claims 9 to 14, wherein at least one of the conveyor paths (3) runs perpendicular to the main axis of rotation (HA).

16. A conveying device (1) comprising a vertical transfer device (2) according to any of claims 1 to 8, wherein the conveying device (1) is part of a workstation, preferably an order picking station (13), and wherein the vertical transfer device (2) is designed for stopping the rotation of the main rotor (6) and the compensation rotor (10) when the conveyed goods support (5) is located in a corner of the trajectory (11) which faces a person performing the order picking (14).

17. The conveying device (1) according to claim 16, wherein a control of the main rotor is connected to a control of the workstation and the control of the main rotor is preferably synchronized with a work progress at the workstation.

## Revendications

1. Dispositif de transfert vertical (2) pour un transporteur (1), comprenant un rotor principal (6), un rotor compensatoire (10) et un support de produits transportés (5), dans lequel le rotor principal (6) est configuré pour faire tourner au moins un point de jonction (7) pour le support de produits transportés (5) autour d'un axe de rotation principal (HA) courant sensiblement horizontalement, le point de jonction (7) présentant une première distance (d1) par rapport à l'axe de rotation principal (HA) et le dispositif de transport vertical (2) étant configuré pour maintenir le support de produits transportés (5) sensiblement horizontalement au cours de la rotation autour de l'axe de rotation principal (HA),
dans lequel le support de produits transportés (5) est couplé au point de jonction (7) du rotor principal (6) au moyen du rotor compensatoire (10), dans lequel le rotor compensatoire (10) est configuré pour faire tourner le support de produits transportés (5) autour d'un axe de rotation compensatoire (AA) courant sensiblement parallèlement à l'axe de rotation principal (HA) à travers le point de jonction (7) et dans lequel le support de produits transportés (5) présente une deuxième distance (d2) par rapport à l'axe de rotation compensatoire (AA), le rotor principal (6) et le rotor compensatoire (10) étant configurés pour tourner dans des directions opposées, **caractérisé en ce que** le rotor compensatoire (10) est configuré pour faire tourner le support de produits transportés (5) à une vitesse angulaire compensatoire (ω2) qui est trois fois supérieure à une vitesse angulaire principale (ω1) à laquelle le rotor principal (6) fait tourner le point de jonction (7), la première et la deuxième distance (d1, d2) étant choisies de telle sorte que le support de produits transportés (5) se déplace lors du fonctionnement du dispositif de transfert vertical (2) le long d'une trajectoire (11) sensiblement carrée,
ou que le rotor compensatoire (10) est configuré pour faire tourner le support de produits transportés (5) à une vitesse angulaire compensatoire (ω2) qui est deux fois supérieure à une vitesse angulaire principale (ω1) à laquelle le rotor principal (6) fait tourner le point de jonction (7), la première et la deuxième distance (d1, d2) étant choisies de telle sorte que le support de produits transportés (5) se déplace lors du fonctionnement du dispositif de transfert vertical (2) le long d'une trajectoire (11) sensiblement triangulaire,
ou que le rotor compensatoire (10) est configuré pour faire tourner le support de produits transportés (5) à une vitesse angulaire compensatoire (ω2) qui est égale à une vitesse angulaire principale (ω1) à laquelle le rotor principal (6) fait tourner le point de jonction (7), la première et la deuxième distance (d1, d2) étant choisies de même taille, de sorte que le support de produits transportés (5) se déplace lors du fonctionnement du dispositif de transfert vertical (2) le long d'une trajectoire (11) sensiblement linéaire.

2. Dispositif de transfert vertical (2) selon la revendication 1, dans lequel le support de produits transportés (5) se déplace lors du fonctionnement du dispositif de transfert vertical (2) le long d'une trajectoire (11) sensiblement carrée, le dispositif de transfert vertical (2) étant configuré pour déplacer le support de produits transportés (5) uniquement le long de directions sensiblement horizontales et verticales.

3. Dispositif de transfert vertical (2) selon la revendication 1, dans lequel le support de produits transportés (5) se déplace lors du fonctionnement du dispositif de transfert vertical (2) le long d'une trajectoire (11) sensiblement linéaire, le dispositif de transfert vertical (2) étant configuré pour déplacer le support de produits transportés (5) uniquement le long de directions sensiblement verticales.

4. Dispositif de transfert vertical (2) selon une des revendications 1 à 3, comprenant un moyen de traction (12) relié au rotor principal (6) et au rotor compensatoire (10), qui est configuré pour obtenir la rotation du rotor compensatoire (10) à partir de la rotation du rotor principal (6).

5. Dispositif de transfert vertical (2) selon la revendication 4, comprenant en outre un dispositif de démultiplication (13) qui est configuré pour convertir la vitesse angulaire principale (ω1) du rotor principal (6) en vitesse angulaire compensatoire (ω2) du rotor compensatoire (10).

6. Dispositif de transfert vertical (2) selon une des revendications 1 à 5, dans lequel le support de produits transportés (5) est une fourche rigide, une fourche formée par des composants de transport actifs, par exemple une fourche formée par des rouleaux de transport ou des pistes de courroie, ou un élément de transport actif, de préférence une courroie ou des rouleaux.

7. Dispositif de transfert vertical (2) selon une des revendications 1 à 6, comprenant au moins deux, de préférence trois ou quatre, des supports de produits transportés (5) susmentionnés, dont les points de jonction (7) associés sont répartis régulièrement autour de l'axe de rotation principal (HA).

8. Dispositif de transfert vertical (2) selon une des revendications 1 à 7, comprenant un dispositif de détection de position de rotor qui est configuré pour déterminer la vitesse du rotor principal et/ou du rotor compensatoire afin de ralentir ou d'arrêter le déplacement du support de produits transportés, de préférence dans un des coins de la trajectoire.

9. Transporteur (1) comprenant un dispositif de transfert vertical (2) selon une des revendications 1 à 8 et au moins un chemin de transport (3) qui se raccorde de telle sorte au dispositif de transfert vertical (2) qu'un produit transporté (4) peut, dans au moins une position du support de produits transportés (5), être transféré de façon sensiblement continue du chemin de transport (3) au support de produits transportés (5).

10. Transporteur (1) selon la revendication 9 comprenant un dispositif de transfert vertical (2) selon une des revendications 1, 2 ou 4 à 8, dans lequel le support de produits transportés (5) se déplace lors du fonctionnement du dispositif de transfert vertical (2) le long d'une trajectoire (11) sensiblement carrée et dans lequel le chemin de transport (3) se raccorde à un premier coin de la trajectoire carrée (11) du support de produits transportés (5).

11. Transporteur (1) selon la revendication 10, comprenant un autre chemin de transport (3) qui se raccorde à un coin de la trajectoire carrée (11) du support de produits transportés (5) opposé au premier coin.

12. Transporteur (1) selon la revendication 10, comprenant un autre chemin de transport (3) qui se raccorde à un coin de la trajectoire carrée (11) du support de produits transportés (5) situé au-dessus ou au-dessous du premier coin.

13. Transporteur (1) comprenant un dispositif de transfert vertical (2) selon une des revendications 1 à 8 et au moins deux, de préférence trois ou quatre chemins de transport (3), chaque chemin de transport (3) se raccordant de préférence à un autre coin de la trajectoire (11) du support de produits transportés (5).

14. Transporteur (1) selon une des revendications 9 à 13, dans lequel au moins un des chemins de transport (3) court parallèlement à l'axe de rotation principal (HA).

15. Transporteur (1) selon une des revendications 9 à 14, dans lequel au moins un des chemins de transport (3) court perpendiculairement à l'axe de rotation principal (HA).

16. Transporteur (1) comprenant un dispositif de transfert vertical (2) selon une des revendications 1 à 8, lequel transporteur (1) fait partie d'un poste de travail, de préférence d'un poste de préparation de commandes (13), et dans lequel le dispositif de transfert vertical (2) est configuré pour interrompre la rotation du rotor principal (6) et du rotor compensatoire (10) quand le support de produits transportés (5) se trouve dans un coin de la trajectoire (11) orienté vers un employé de préparation de commandes (14).

17. Transporteur (1) selon la revendication 16, dans lequel une commande du rotor principal est reliée à une commande du poste de travail et la commande du rotor principal est de préférence synchronisée avec un avancement du travail sur le poste de travail.
